# EUROPEAN PATENT APPLICATION

(11) **EP 3 950 410 A1**
(43) Date of publication of application: **09.02.2022**
(21) Application number: 20784303.8
(22) Date of filing: 11.03.2020
(51) Int. Cl.: B60L 53/14

(54) **METHOD AND SYSTEM FOR CONTROLLING MOBILE CHARGING APPARATUS**

(30) Priority: 02.04.2019 CN 201910263251
(71) Applicant: Envision Energy Co., Ltd., Jiangyin Wuxi Jiangsu 214443 (CN)
(72) Inventor: XU, Xinyu, Wuxi, Jiangsu 214443 (CN); DU, Dong, Wuxi, Jiangsu 214443 (CN); HU, Yang, Wuxi, Jiangsu 214443 (CN)
(74) Representative: Miao, Tianhao
(86) International application number: PCT/CN2020/078726
(87) International publication number: WO 2020/199871

(57) **Abstract**

The invention relates to a method for controlling a mobile charging device, which comprises the following steps: receiving an order information from the user, the order information comprising the charging location where the electric vehicle will be charged; determining a navigation route between the mobile charging device and the charging location according to the order information;navigating the mobile charging device to the charging position according to the navigation route and connecting the mobile charging device with the charging interface; and charging the electric vehicle through the charging interface. The invention relates to a system of the same. Through the invention,the mobile charging device can be intelligently dispatched according to user needs and make it autonomously travel to the user's electric vehicle and charge it, thereby greatly optimizing the charging resources of the electric vehicle,there is no phenomenon in which the vehicle that does not need to be charged occupies the charging position,and it is greatly convenient that the user does not need to find and drive to the charging location by himself.

## Description

### THECHNICAL FIELD

The present invention relates generally to the field of motor vehicle charging in Internet of Things, in particular, to a method for controlling mobile charging device. In addition, the present invention also relates to a system for controlling mobile charging device.

### BACKGROUND

With the rapid development of electric vehicle technology and the continuous deepening of concepts such as green travel, low-carbon environmental protection, and healthy living in recent years, more and more people have begun to choose electric vehicles under the guidance of various subsidy policies from relevant government departments. However, the difficulty of charging has become a prominent problem that troubles the majority of electric vehicle owners. At present, the charging of electric vehicles is mainly done through charging stations or various charging piles. That is, electric vehicles need to drive to charging stations to charge or replace the batteries, or they may charge by charging pile set at the roadside, residential area or parking. Since the charging station or charging pile is a fixed device built on a fixed site, it is necessary for electric vehicles to drive to a designated charging station or charging pile for charging, which cannot meet the growing demand for electric vehicle charging.

Recently, some mobile charging car products have appeared on the market, but most of the existing mobile charging cars are mainly emergency charging and swapping cars, which are large in size, small in number, inconvenient to call, and are stored between multiple storage points. There is no communication and information sharing between points and charging cars, and between charging cars and charging cars, and there is no special charging car management platform to collectively manage and allocate resources for storage points and charging cars in a certain area, so it cannot be efficient and reasonably allocate limited charging vehicle resources.

In addition, when users use this kind of charging car, they often encounter problems such as inability to easily find available charging cars near the destination, limited service areas, and inability to know the charging status in real time during use, these problems has caused great inconvenience, which limits the further promotion of electric vehicles.

Therefore, there is an urgent need for a more efficient and intelligent method and system for controlling mobile charging devices.

### SUMMARY

The object of the present invention is to provide a method and system for controlling mobile charging devices,through which the mobile charging device can be intelligently dispatched according to user needs and make it autonomously travel to the user's electric vehicle and charge it, thereby greatly optimizing the charging resources of the electric vehicle, so that it will not happen that vehicles that do not need to be charged occupy the charging position, and it is greatly convenient for users, so that users do not need to find and drive to the charging position by themselves.

In the first aspect of the present invention, this object is solved by a method for controlling mobile charging devices, comprising:
receiving an order information from the user, the order information comprising the charging location where the electric vehicle will be charged;
determining a navigation route between the mobile charging device and the charging location according to the order information;
navigating the mobile charging device to the charging position according to the navigation route; and
charging the electric vehicle through the charging interface.

In the present invention, electric vehicles comprise electric vehicles such as electric car, electric motorcycles, and electric bicycles. In addition, in the present invention, the charging interface may be a charging auxiliary connection device, that is, a fixed or movable charging pile, wherein the mobile charging device may be docked with the charging pile and the user's electric vehicle may be connected to the charging pile through the charging gun for charging; the charging interface may also be directly a charging interface on a motor vehicle, wherein the mobile charging device can be docked with the charging interface.

In a preferred solution of the present invention, the method further comprises: docking the mobile charging device with the charging interface. Through the preferred solution, it can realize the automatic docking between the mobile charging device and the charging interface. The automatic docking may be realized by an automatic docking device. For example, the claws of the automatic docking device can be extended to lock with the charging interface to achieve docking. Reliable docking can be achieved without the need for accurate alignment of the plug and socket. Because the claws can achieve a larger capture range and easy locking, and the claws have better flexibility and maneuverability. However, it should be pointed out here that the present invention is also applicable to manual docking scenarios, that is, a worker or user docks the mobile charging device with the charging interface.

In a preferred solution of the present invention, it is provided that receiving an order information from the user comprises:
displaying the available mobile charging devices and available charging locations to the user according to the user input information; and
receiving the order information from the user, where the order information comprises the mobile charging device selected by the user and the charging location selected by the user.

Through this preferred solution, it is convenient for the user to freely choose among the recommended mobile charging devices and available charging positions, thereby providing convenience to the user. This is especially advantageous in scenarios where the user has not yet reached the charging location, but wants to charge at a specific charging location, or the user's charging electric vehicle needs more power, so mobile charging device with more remaining power is required to charge. Here, the power of each mobile charging device may be additionally displayed, for example, in the form of a percentage of power.

In another preferred solution of the present invention, it is provided that, the method further comprises:
receiving the user's current location information from the user;
navigating the user to the charging location according to the user's current location information.

Through this preferred solution, the user can be guided to the designated charging position to perform the charging operation. The user's navigation may be implemented by, for example, a third-party navigation software, where the system displays the navigation information output by the navigation software to the user in real time. The above-mentioned navigation may also be implemented by using the navigation module of the system.

In yet another preferred solution of the present invention, it is provided that navigating the mobile charging device to the charging position according to the navigation route comprises:
identifying obstacles in the navigation route and determine the types of obstacles, where the types of obstacles include pedestrians, fixed states, and temporary obstacles; and
determining whether to re-plan the navigation route according to the type of obstacle and mobility of obstacle.

Through this preferred solution, the mobile charging device can autonomously avoid obstacles to reach the designated charging position when there are obstacles in the navigation route. The navigation route determination process is, for example, through GPS or an electronic map program,it can be calculated that the (optimal) navigation route from the current location of the mobile charging device to the device to be charged, or various electronic signs, such as radio frequency tags,or the wireless signal transmission point may also be set in the parking lot,that allows the mobile charging device to accurately find the corresponding parking space. The real-time update process of driving operation or route is, for example: the lidar sensor and/or ultrasonic radar sensor equipped on the mobile charging device can obtain radar images of the surroundings or on the route; then, by analyzing the radar images, it can be known whether there is on the route Obstacles, such as people, mobile or temporary obstacles, etc.; in the case of obstacles that cannot be bypassed, use GPS or electronic map programs to calculate other routes from the current location of the charging device to the device to be charged; or when it can be bypassed In the case of passing obstacles, determine additional or alternative driving operations such as steering and parking waiting. The obstacles that cannot be bypassed include, for example, fixed obstacles that block most roads, and the obstacles that can be bypassed include, for example, pedestrians, obstacles in movement, and so on. Through this preferred solution, real-time update of the route can be achieved, thereby obtaining better robustness and fault tolerance.

It is provided in an extended scheme of the present invention that the method further comprises the following steps:
receiving the user's credentials from the users;
authenticating user's credentials.

Through this expansion scheme, legal users and legal operations can be guaranteed, thereby improving security. User's credentials include, for example, character passwords, voice passwords, fingerprints, SMS verification codes, facial features, and so on.

In a preferred solution of the present invention, it is specified that the charging interface is a charging auxiliary connection device equipped with a two-dimensional code, and the method further comprises:
authenticating the user after the user scans the two-dimensional code; and
sending a charging instruction to the mobile charging device in the case of successful authentication.

Through this preferred solution, it is possible to effectively and conveniently ensure that the legal user is charged, wherein scanning the two-dimensional code is convenient and safe for the user.

It is provided in an extended scheme of the present invention that charging the electric vehicle through the charging interface comprises:
receiving a suspend charging request from the user;
querying and displaying the charging status of the mobile charging device;
instructing the mobile charging device to suspend charging when the charging state meets the requirements;
receiving a continue charging request from the user; and
instructing the mobile charging device to continue charging.

Through this extended solution, an suspend charging request of users can be safely executed,wherein when the charging state is lower than a certain threshold, the electric vehicle may not be able to drive or the battery life is too low. At this time, the user can be reminded or the suspension is not allowed. In other cases, other charging state conditions may also be set to ensure safety.

In another extended solution of the present invention, it is provided that charging the electric vehicle through the charging interface comprises:
receiving an early end charging request from the user;
querying and displaying the charging status of the mobile charging device; and
instructing the mobile charging device to end charging in the case where the charging state meets the requirements.

Through this extended solution, an early end charging request of users can be safely executed, wherein when the charging state is lower than a certain threshold, the electric vehicle may not be able to drive or the battery life is too low. At this time, the user can be reminded or the early end charging is not allowed. In other cases, other charging state conditions may also be set to ensure safety.

It is provided in another extended solution of the present invention that the method further comprises:
recording the user's charging status and/or charging duration and/or charging capacity; and
calculating the charging fee according to the user's charging status and/or charging duration and/or charging capacity and/or user classification.

Through this expansion scheme, the charging fee can be calculated remotely and the need for on-site manpower input can be greatly reduced. The charging fee may be determined by multiplying the charging time or the charging amount by the charging rate or determined by the user level. Charging amount may be determined, for example, by a smart meter that measures electrical energy.

In the second aspect of the present invention, the aforementioned object is solved by a method executed in a mobile application, and the method comprises the following steps:
receiving the user's current location information from the user;
displaying the available mobile charging devices and available charging locations to the user according to the user's current location information;
receiving the order information from the user, where the order information comprises the mobile charging device selected by the user and the charging location selected by the user;
displaying to the user navigation information for navigating the user to the charging location; and
displaying to the user the navigation route between the mobile charging device and the charging location and the current location of the mobile charging device.

It is provided in an extended scheme of the present invention that the method further comprises the following steps:
receiving user credentials and/or scanned two-dimensional code information from users;
authenticating the user credentials and/or the two-dimensional code; and
charging after the mobile charging device is docked with the charging interface in the case of successful authentication.

Through this preferred solution, it is possible to effectively and conveniently ensure that the legal user is charged, wherein scanning the two-dimensional code is convenient and safe for the user. Of course, other authentication methods are also possible, such as near field communication NFC, radio frequency identification, and so on.

It is provided in an extended scheme of the present invention that the method further comprises the following steps:
displaying the charging fee and charging status to the user;
receiving payment information from users; and
submiting a payment request according to the payment information and guide the user to complete the payment.

Through this expansion scheme, the charging fee can be calculated remotely and the need for on-site manpower input can be greatly reduced. The charging fee may be determined by multiplying the charging time or the charging amount by the charging rate or determined by the user level. Charging amount may be determined, for example, by a smart meter that measures electrical energy.

In the third aspect of the present invention, this object is solved by a system for controlling mobile charging devices, comprising:
a mobile application, which is configured to perform the following actions:
   receiving an order information from the user, the order information including the charging location where the electric vehicle will be charged;
   sending the order information to the server;
the server, which is configured to perform the following actions:
   determining a navigation route between the mobile charging device and the charging location according to the order information;and
   sending the navigation route to the mobile charging device;
the mobile charging device, which is configured to perform the following actions:
   driving to the charging position according to the navigation route;
   and
      charging the electric vehicle through the charging interface.

It is provided in an extended scheme of the present invention that the mobile charging device is configured to perform the following actions:
identifying obstacles in the navigation route and determine the types of obstacles, where the types of obstacles include pedestrians, fixed states, and temporary obstacles; and
determining whether to re-plan the navigation route according to the type of obstacle and mobility of obstacle.

Through this preferred solution, the mobile charging device can autonomously avoid obstacles to reach the designated charging position when there are obstacles in the navigation route.

It is provided in an extended scheme of the present invention that the mobile charging device is configured to perform the following actions: docking with the charging interface at the charging position. Through the preferred solution, it can realize the automatic docking between the mobile charging device and the charging interface. The automatic docking may be realized by an automatic docking device. For example, the claws of the automatic docking device can be extended to lock with the charging interface to achieve docking. Reliable docking can be achieved without the need for accurate alignment of the plug and socket. Because the claws can achieve a larger capture range and easy locking, and the claws have better flexibility and maneuverability. However, it should be pointed out here that the present invention is also applicable to manual docking scenarios, that is, a worker or user docks the mobile charging device with the charging interface.

It is provided in an extended scheme of the present invention that the mobile charging device is configured to perform the following actions:
separating from the charging interface after charging is complete; and
travelling to the parking location or designated location.

With this preferred solution, the mobile charging device can be automatically returned to the parking position after the charging is completed to wait for the next charging task.

It is provided in another preferred solution of the present invention:
the server is also configured to perform the following actions:
   recording the user's charging status and/or charging duration and/or charging capacity; and
   calculating the charging fee according to the user's charging status and/or charging duration and/or charging capacity and/or user classification;
sending the charging fee to the mobile application; and
the mobile application is further configured to perform the following actions:
   displaying the charging fee to the user;
   receiving payment information from users; and
   submiting a payment request according to the payment information and guide the user to complete the payment.

Through this preferred solution, charging fees can be automatically calculated and settled remotely without on-site manpower input.

It is provided in another preferred solution of the present invention that the mobile charging device comprises:
an automatic travel module, which is configured to travel to the device to be charged according to the route between the mobile charging device and the device to be charged;
a power module, which is configured to store and provide electrical energy;
an automatic docking and separation device, which is configured to perform docking and separation between a first connector and a second connector which is capable of making electrical contact with the first connector, wherein the first connector and the second connector are used for transmitting electric energy; as well as
a remote communication module,which is configured to communicate with the server remotely.

Through this preferred solution, automatic travel, automatic docking and automatic charging can be realized, thereby greatly reducing manpower input. For example, the claws of the automatic docking device can be extended to lock with the charging interface to achieve docking. Reliable docking can be achieved without the need for accurate alignment of the plug and socket. Because the claws can achieve a larger capture range and easy locking, and the claws have better flexibility and maneuverability.

The present invention has at least the following beneficial effects: (1) The present invention solves the problem that it is difficult for owners of electric vehicles to find charging piles or mobile charging devices, because in the present invention the mobile charging device can be intelligently dispatched according to user needs and make it autonomously travel to the user's electric vehicle and charge it, thereby greatly optimizing the charging resources of the electric vehicle; (2) The present invention solves the problem that the vehicle that does not need to be charged occupies the charging position, because the mobile charging device can be moved to the charging location designated by the user, and it is greatly convenient that the user does not need to find and drive to the charging location by himself; (3) The present invention solves the problem that the owner of the electric vehicle needs to wait for the end of the electric vehicle charging or passively move the vehicle, because in the present invention, the owner of the electric vehicle can leave after the electric vehicle is connecting to the charging interface, and then the system will start and end the charging process,wherein the mobile charging device can be automatically separated from the charging interface to charge other electric vehicles; (4) The present invention solves the problem that the utilization rate of fixed charging piles is extremely low (About 3%). Because the present invention uses mobile charging devices to charge, each mobile charging device can travel to the designated charging location for charging at any time, thus greatly improving the utilization rate of each charging device (mobile charging device).

### BRIEF DESCRIPTION OF THE DRAWINGS

The invention is set forth below in more detail with reference to the detailed embodiments in conjunction with the drawings.
Figure 1 shows a schematic diagram of a system for controlling a mobile charging device; and
Figure 2 shows the flow of a method for controlling a mobile charging device.

### DETAILED DESCRIPTION OF THE INVENTION

It should be pointed out that, components in the drawings may be shown in an exaggerated form for the purpose of illustration, instead of being true to scale. In the drawings, same or functionally same components are provided with same reference numerals.

In the present invention, unless otherwise specified, "arranged on", "arranged above", and "arranged above" do not exclude the presence of intermediates between the two. In addition, "arranged on or above" only means the relative positional relationship between two components, and under certain circumstances, such as by inverting the direction of the product, it can also be converted to "arranged under or below", and vice versa.

In the present invention, each embodiment is only intended to illustrate the solution of the present invention, and should not be construed as limiting.

In the present invention, unless otherwise specified, the articles "a" and "an" do not exclude the scenario of multiple elements.

It should also be noted that in the embodiments of the present invention, for clarity and simplicity, only a part of the parts or components may be shown, but those of ordinary skill in the art can understand that under the teaching of the present invention, required parts or components may be added according to concrete scenarios.

It should also be noted that within the scope of the present invention, the terms "same", "equal", "equal to" and other terms do not mean that the two values are absolutely equal, but allow certain reasonable errors, that is, these terms also encompass the meanings of "substantially the same", "substantially equal", and "substantially equal to".

In addition, the numbers of the steps of methods of the present invention are not intended to limit the execution order of the method steps. Unless otherwise specified, the method steps may be performed in a different order.

Finally, it should also be pointed out that although the present invention is shown as an electric car charging scene, the present invention is not limited to this, but can also be used for charging other electric vehicles, such as electric bicycles, electric motorcycles, and the like. In addition, although the present invention is described with a mobile charging vehicle as an example, the present invention is also applicable to other mobile charging devices, drone charging devices, and so on.

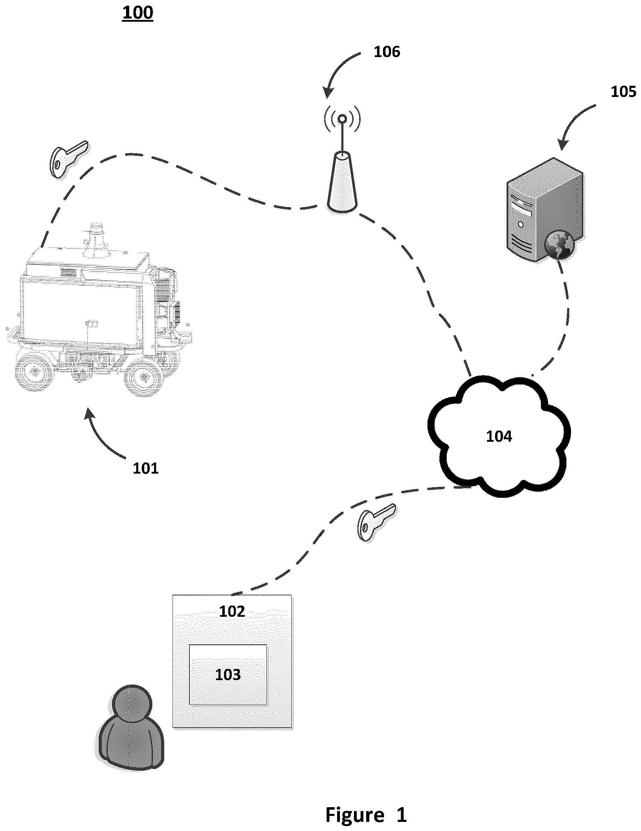

Figure 1 shows a schematic diagram of a system100 for controlling a mobile charging device; and

As shown in FIG. 1, a system 100 for controlling a mobile charging device comprises a mobile charging device 101, a mobile application 103 on a user's mobile device 102, and a server 105. The mobile charging device 101 may access the Internet 104 through a wireless access device, such as a Wi-Fi router 106, so as to communicate with the server 105. The mobile charging device 101 may also communicate with the server 105 through other wireless access devices, or directly communicate with the server 105, such as through a cellular wireless connection. The user's mobile device 102 also accesses the Internet 104 to communicate with the server 105. In order to improve security, the communication between the user's mobile device 102 and the server 105 and between the mobile charging device 101 and the server 105 may be encrypted communication. The user's mobile device 102 may be a mobile device such as a smart phone, a tablet computer, a laptop computer, or the like, or a fixed device such as a desktop computer. In other embodiments, the communication between the server 105, the mobile charging device 101, and the user's mobile device 102 is implemented through an enterprise network, a dedicated network, a local area network, and the like.

The components of the system 100 are described below (note that some components and steps are optional):
- the automatic charging device 101, comprises:
   An automatic travel module (not shown), which is configured to travel to the device to be charged, such as electric vehicles according to the route between the mobile charging device and the device to be charged; The navigation route may be calculated by the server 105 based on the current location of the mobile charging device 101 and the charging location selected by the user, for example. The automatic travel module comprises, for example, an automatic driving module, a vehicle chassis, a lidar sensor and/or an ultrasonic radar sensor, wherein the automatic driving module is configured to determine a driving operation according to the route, and the vehicle chassis is configured to perform the driving operation, and the automatic driving module determines the obstacles in the route according to the sensor signal of the lidar sensor and/or the ultrasonic radar sensor to re-determine the driving operation and/or update the route. The real-time update process of driving operation or route is, for example: the lidar sensor and/or ultrasonic radar sensor equipped on the mobile charging device can obtain radar images or ultrasonic images of the surroundings or on the route; then, by analyzing the images, it can be known whether there is on the route obstacles, such as people, mobile or temporary obstacles, etc.; in the case of obstacles that cannot be bypassed, use GPS or electronic map programs to calculate other routes from the current location of the charging device to the device to be charged; or when it can be bypassed In the case of passing obstacles, determine additional or alternative driving operations such as steering and parking waiting. The obstacles that cannot be bypassed include, for example, fixed obstacles that block most roads, and the obstacles that can be bypassed include, for example, pedestrians, obstacles in movement, and so on. The automatic driving module may include, for example, a positioning and navigation module, a path planning module, and a control execution module.

The positioning and navigation module performs positioning and navigation, for example, through the following steps a-e:
a. The positioning and navigation module uses lidar point cloud data and assists with other sensor information such as odometer during movement to determine the position and heading of the vehicle body, and create a map for real-time updates.
b. The magnetic line is preset on the ground of the garage, and the positioning and navigation module detects the travel route through magnetic sensors, and perform other environment-aware operations which is assisted by sensors such as lidar, camera, and ultrasonic radar.
c. Preset multiple wireless signal transmission points in the garage, and the positioning navigation module calculates the real-time position information of the vehicle through the geometric relationship between the fixed radio frequency tag and the mobile radio frequency tag, and perform other environment-aware operations which is assisted by sensors such as lidar, camera, ultrasonic radar, etc.
d. Preset lane line markings on the ground of the garage,the positioning and navigation module senses the position of the lane line through the camera and performs path tracking operations,the lane line markings here are not limited to lane lines on traditional highways, but should include other continuous, discrete, regular and irregular markings that can provide navigation information.
e. Preset rails in the garage, and the mobile charging devices move on the rails through rail racks, rollers and other devices,the rails here are not limited to rails laid on the ground, but should include other wall hangings type, hanging type guide rail that can be connected to mobile charging piles and provide movement guidance.
f. The positioning and navigation module senses surrounding environment images and point cloud data from the camera and lidar, and transmits them to the control center through wireless communication devices. The control center remotely controls the intelligent mobile charging pile to the reference position according to the received environmental information.
g. The positioning and navigation module performs positioning and navigation based on the location information provided by GPS and electronic maps, and perform other environment-aware operations which is assisted by sensors such as lidar, camera, and ultrasonic radar.

The path planning module may include, for example:
the global path decision module, plans a passable path that avoids known obstacles and connects the starting point and the target point, based on the prior map information provided by the positioning and navigation module;
the local path decision module uses sensors such as lidar, camera, ultrasonic radar, millimeter wave radar, and infrared range finder to sense obstacles and other information on the way in real time, and perform obstacle avoidance operations, based on the passable path provided by the global path plan decision module. Obstacle avoidance operations include: decelerate, stop, modify the passable path provided by the global path plan decision module, discard the passable path provided by the global path plan decision module and re-plan a new path.

The power module, which is configured to store and provide electrical energy. With the power module of the present invention, a single electric energy conversion unit can be used to realize both charging and discharging, and a single port can be used for charging and discharging. The mobile charging device 101 can have both AC/DC and DC/DC bidirectional converter modules. Therefore, the mobile charging device 101 can supplement electricity from the grid or from an energy storage system installed in a parking lot. Since the energy storage system has the functions of peak-to-valley arbitrage and dynamic capacity reduction, the mobile charging device 101 can use the energy stored in the valley to improve economy on the one hand, and on the other hand, it can also avoid customer power consumption suddenly increased due to concentrated charging demand. In another scenario, the power in the mobile charging device 101 may also interact with the power grid, under normal circumstances, the mobile charging device 101 will supplement power from the power grid,under special circumstances, the mobile charging device 101 may also discharge to the power grid as a means of regulation client of electric load to realize the function of V2X.

An automatic docking and separation device, which is configured to perform docking and separation between a first connector and a second connector which is capable of making electrical contact with the first connector, wherein the first connector and the second connector are used for transmitting electric energy. The automatic docking and separation device of the present invention adopts claws to realize accurate and reliable docking and separation.

A remote communication module, which is configured to communicate with the server105 remotely. The remote communication module may be, for example, a wireless communication module, such as a cellular communication module, a Wi-Fi module, a Blue tooth module, a ZigBee module, an infrared communication module, and so on.

An optional billing module, which is configured to bill the charges generated by the charging of the device to be charged. The billing module may include, for example, a smart meter. In a preferred solution, the billing module may send the charging data to the server 105 to generate a bill, that is, the billing module measures charging data such as charging time and charging amount and sends the charging data to the server 105. The server 105 records and generates the fee information and sends it to the mobile application 103, and then the mobile application 103 displays the fee information to the user for the user to pay.

Optional display and optional input device. The display is, for example, configured to display the current charging status and estimated service time. Of course, this information may also be displayed in a mobile application on the user's mobile device 102. The input device is configured for the user to input instructions, such as suspending or ending charging early, for the server 105 to perform processing and execution.
- A mobile application103 on the user's mobile device 102, which is configured to perform the following actions:
   receiving user credentials, for example, character passwords, voice passwords, fingerprints, SMS verification codes, facial features, scanned two-dimensional code and so on from users. The user credential may be directly authenticated by the user's mobile device 102 (for example, through Apple Touch ID or the facial recognition function of the mobile device), or may be sent by the mobile application 103 to the server 105 or a third-party authentication agency for authentication. In the case of successful authentication, the user is allowed to log in or perform charging operations. The user can download the mobile application 103 from the cloud to the user's mobile device 102 via the network and install the mobile application locally on the user's mobile device 102, or the mobile application 103 is pre-installed on the user's mobile device 102 of the user. When the user uses the mobile application 103 for the first time, he needs to register online and fill in necessary user information. For example, in the login step, the user starts the mobile application 103 on the user's mobile device 102, inputs the user credentials, and then causes the user's mobile device 102 to establish a connection with the cloud. The user's mobile device 102 is, for example, a mobile device, such as a smart phone, a tablet computer, a laptop computer, a personal digital assistant PDA, etc., or the user's mobile device 102 may also be a fixed device, such as a desktop computer.
   receiving the user's current location information from the user,and displaying the available mobile charging devices and available charging locations to the user according to the user's current location information;
   receiving the order information from the user, the order information comprises the mobile charging device 101 selected by the user and the charging location selected by the user.
   displaying to the user navigation information for navigating the user to the charging location. Here, the user can activate the positioning function of the user's mobile device 102 to determine user's own location, and guide the user to find the target parking location through the navigation function of the user's mobile device 102. The user uses the positioning function of the user's mobile device 102 to determine the current location of the user; the user's mobile device 102 is configured to search for nearby charging requests and sends the searched data to the cloud; the cloud computes charging service and displays the operation strategy and transmits the operation strategy to the operation strategy center,the operation strategy center determines the finalized strategy and transmits the finalized strategy to the cloud; the cloud sends the charging service location information to the user's mobile device 102; the navigation function of the user's mobile device 102 is activated. In addition, the present invention may further include a canceling step, which allows the user to cancel the order within a certain time according to actual needs, and the canceling step may occur at any stage in the above-mentioned control method. In addition, the operation strategy center may also take the initiative to cancel, so that the operation strategy center can cancel or terminate the use through the cloud when the system determines that the user does not meet certain conditions or the user has not arrived after a predetermined time.
   displaying to the user the navigation route between the mobile charging device and the charging location and the current location of the mobile charging device.
   receiving a suspend charging request or an early end charging request is optionally from the user and the instruction is sent to the server 105 for processing.
   displaying the charging fee to the user optionally, receiving payment information from the user, and submiting a payment request according to the payment information and guide the user to complete the payment. After the payment is successful, the payment success information is displayed to the user.
- Server105, which is configured to perform the following actions:
   authenticating the user credentials are optionally to allow the user to log in or perform charging operations.
   sending the available mobile charging device 101 and the available charging location optionally to the mobile application 103 for the mobile application 103 to display to the user. The available mobile charging device 101 may be determined by the server 105 in the following manner, for example: determining one or more mobile charging devices 101 closest to the charging location according to the charging location selected by the user; determining whether the mobile charging device 101 is available, such as whether it is idle or whether it is fully charged (such as whether the power is higher than the power to charge an ordinary vehicle, such as whether it is higher than 20%). The available charging location may be determined by the server 105 in the following manner, for example: according to the current location of the user, the nearest available parking space is displayed to the user for the user to select. Then, the server 105 generates an order according to the order information such as the charging location and the mobile charging device selected by the user optionally.
   transmitting the order to the corresponding mobile charging device 101. For example, the server 105 may either directly send an order to the mobile charging device 101, or it may send specific parameters, such as the charging location of the device to be charged, charging time, and charging degree (such as charging to 50%, 80%, or 100%). and many more.
   determining a navigation route between the mobile charging device and the charging location according to the order information and sending the navigation route to the mobile charging device 101. The navigation route determination may be performed by a dedicated service provider, or may be calculated by the server 105. The navigation route determination process is, for example, through GPS or an electronic map program,it can be calculated that the (optimal) navigation route from the current location of the mobile charging device 101 to the device to be charged, or various electronic signs, such as radio frequency tags,or the wireless signal transmission point may also be set in the parking lot,that allows the mobile charging device 101 to accurately find the corresponding parking space by identifying the electronic signs. Then the server 105 sends the navigation route to the mobile charging device101; In a special scenario, the mobile charging device 101 itself has the calculation capability for calculating the navigation route, so the navigation route calculation can be completed by the mobile charging device 101 itself.
   performing a charging suspension operation optionally, including: receiving a suspend charging request from the mobile application 103; querying the charging status of the mobile charging device; instructing the mobile charging device to suspend charging when the charging status meets the requirements; receiving a continuation charging request from the mobile application 103; and instructing the mobile charging device to continue charging. For example when the charging state is lower than a certain threshold, the electric vehicle may not be able to drive or the battery life is too low,at this time, the user can be reminded or the suspension is not allowed. In other cases, other charging state conditions may also be set to ensure safety.
   performing an early end charging operation optionally includes: receiving an early end charging request from the mobile application 103; querying the charging state of the mobile charging device 101; and instructing the mobile charging device to end charging if the charging state meets the requirements. For example when the charging state is lower than a certain threshold, the electric vehicle may not be able to drive or the battery life is too low,at this time, the user can be reminded or the suspension is not allowed. In other cases, other charging state conditions may also be set to ensure safety.

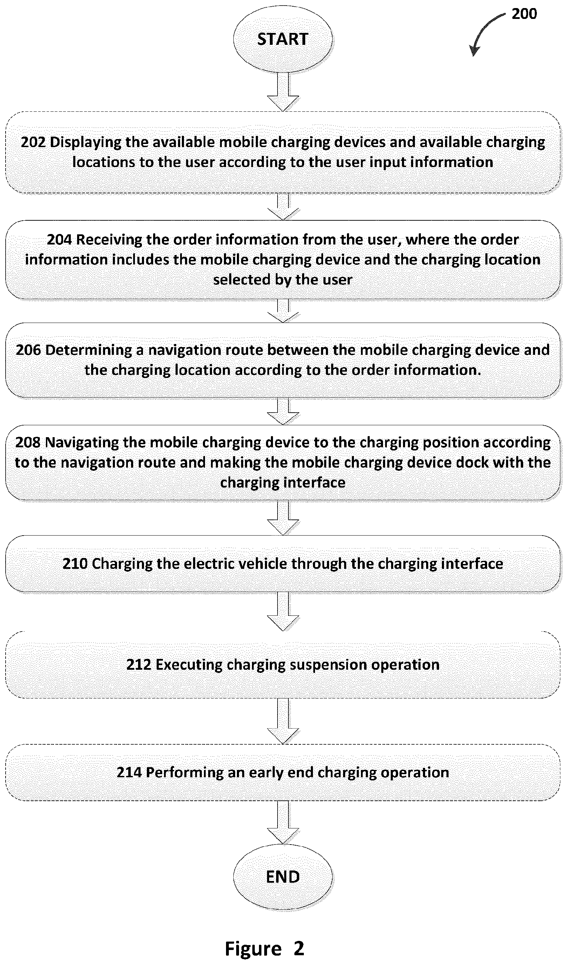

Figure 2 shows the flow of a method for controlling a mobile charging device, wherein the dashed box indicates optional steps.

In optional step 202, the available mobile charging devices and available charging locations is displayed to the user according to the user input information. Here, the system 100 searches for information of the available mobile charging device 101 (including but not limited to the picture, type, configuration, etc.) near the location designated by the user according to the user's input information (such as destination, area code, etc.), and the status of each mobile charging device 101 is displayed on the user's mobile device 102,the user can select a charging location to reserve within the range of the available mobile charging devices 101 displayed. The user's mobile device 102 sends the user's confirmation information to the cloud, and the cloud identifies the mobile charging device 101 has been booked by the user, an order is generated, and the order is sent to the user's mobile device 102 for the user to view and confirm.

At step 204, the order information is received from the user, where the order information includes the mobile charging device selected by the user and the charging location selected by the user. The user can select the corresponding mobile charging device and charging location on the mobile application 103. The mobile application 103 then sends this information to the server 105.

At step 206, it is determined a navigation route between the mobile charging device and the charging location according to the order information. The navigation route determination process is, for example, through GPS or an electronic map program,it can be calculated that the (optimal, such as the shortest or most unobstructed) navigation route from the current location of the mobile charging device to the device to be charged, or various electronic signs, such as radio frequency tags,or the wireless signal transmission point may also be set in the parking lot,that allows the mobile charging device to accurately find the corresponding parking space. The real-time update process of driving operation or route is, for example: the lidar sensor and/or ultrasonic radar sensor equipped on the mobile charging device101 can obtain radar images of the surroundings or on the route; then, by analyzing the radar images, it can be known whether there is on the route Obstacles, such as people, mobile or temporary obstacles, etc.; in the case of obstacles that cannot be bypassed, use GPS or electronic map programs to calculate other routes from the current location of the charging device to the device to be charged; or when it can be bypassed In the case of passing obstacles, determine additional or alternative driving operations such as steering and parking waiting. The obstacles that cannot be bypassed include, for example, fixed obstacles that block most roads, and the obstacles that can be bypassed include, for example, pedestrians, obstacles in movement, and so on.

At step 208, the mobile charging device is navigated to the charging position according to the navigation route and making the mobile charging device dock with the charging interface. For example, after reaching the target location, the user can find the nearest charging auxiliary connection device according to the prompts, place the charging auxiliary connection device near the vehicle charging plug, and after the vehicle' s charging plug is docked with the charging auxiliary connection device, the mobile charging device 101 confirms through scanning the two-dimensional code or enter verification, the mobile communication device sends the charging request and charging auxiliary connection device information to the server 105 or the cloud. After receiving the charging request, the server 105 or the cloud sends the charging instruction directly to the electronic equipment of the charge car of the mobile charging device 101, and then the charge car will dock with the charging auxiliary connection device and start charging, and the cloud will send feedback of the charging status information to the mobile communication device.

At step 210, the electric vehicle is charged through the charging interface. Here, it is possible to charge a fee for charging the device to be charged. Therefore, the billing module may send the charging data to the server 105 to generate a bill, that is, the billing module measures charging data such as charging time and charging amount and sends the charging data to the server 105. The server 105 records and generates the fee information and sends it to the mobile application 103, and then the mobile application 103 displays the fee information to the user for the user to pay.

At optional step 212, charging suspension operation. The charging suspension operation is executed, for example including: receiving a suspend charging request from the mobile application 103; querying the charging status of the mobile charging device; instructing the mobile charging device to suspend charging when the charging status meets the requirements; receiving a continuation charging request from the mobile application 103; and instructing the mobile charging device to continue charging. For example when the charging state is lower than a certain threshold, the electric vehicle may not be able to drive or the battery life is too low, at this time, the user can be reminded or the suspension is not allowed. In other cases, other charging state conditions may also be set to ensure safety.

In optional step 214, an early end charging operation is performed. An early end charging operation includes for example: receiving an early end charging request from the mobile application 103; querying the charging state of the mobile charging device 101; and instructing the mobile charging device to end charging if the charging state meets the requirements. For example when the charging state is lower than a certain threshold, the electric vehicle may not be able to drive or the battery life is too low,at this time, the user can be reminded or the suspension is not allowed. In other cases, other charging state conditions may also be set to ensure safety.

The present invention has at least the following beneficial effects: (1) The present invention solves the problem that it is difficult for owners of electric vehicles to find charging piles or mobile charging devices, because in the present invention the mobile charging device can be intelligently dispatched according to user needs and make it autonomously travel to the user's electric vehicle and charge it, thereby greatly optimizing the charging resources of the electric vehicle; (2) The present invention solves the problem that the vehicle that does not need to be charged occupies the charging position, because the mobile charging device can be moved to the charging location designated by the user, and it is greatly convenient that the user does not need to find and drive to the charging location by himself; (3) The present invention solves the problem that the owner of the electric vehicle needs to wait for the end of the electric vehicle charging or passively move the vehicle, because in the present invention, the owner of the electric vehicle can leave after the electric vehicle is connecting to the charging interface, and then the system will start and end the charging process,wherein the mobile charging device can be automatically separated from the charging interface to charge other electric vehicles; (4) The present invention solves the problem that the utilization rate of fixed charging piles is extremely low (About 3%). Because the present invention uses mobile charging devices to charge, each mobile charging device can travel to the designated charging location for charging at any time, thus greatly improving the utilization rate of each charging device (mobile charging device).

Although some embodiments of the invention are described in the present application document, those skilled in the art may understand that these embodiments are shown merely as examples. Under the teachings of the invention, various variations, alternatives and modifications are conceivable to those skilled in the art. The appended claims are intended to define the scope of the invention and hereby encompass the claims themselves and equivalent methods and structures.

## Claims

1. A method for controlling mobile charging devices, comprising the following steps:
receiving an order information from the user, the order information including the charging location where the electric vehicle will be charged;
determining a navigation route between the mobile charging device and the charging location according to the order information;
navigating the mobile charging device to the charging position according to the navigation route; and
charging the electric vehicle through a charging interface.

2. The method according to claim 1, further comprising: docking the mobile charging device with the charging interface.

3. The method according to claim 1, wherein receiving the order information from the user comprising:
displaying the available mobile charging devices and available charging locations to the user according to the user input information; and
receiving the order information from the user, wherein the order information includes the mobile charging device selected by the user and the charging location selected by the user.

4. The method according to claim 3, further comprising:
receiving the user's current location information from the user;
navigating the user to the charging location according to the user's current location information.

5. The method according to claim 1, wherein navigating the mobile charging device to the charging position according to the navigation route comprising:
identifying obstacles in the navigation route and determining the types of obstacles, wherein the types of obstacles include pedestrians, fixed states, and temporary obstacles; and
determining whether to re-plan the navigation route according to the type of obstacle and mobility of obstacle.

6. The method described in claim 1, further comprises the following steps:
receiving the user's credentials from the users;
authenticating user's credentials.

7. The method described in claim 1, wherein the charging interface is a charging auxiliary connection device equipped with a two-dimensional code, and the method further comprising:
authenticating the user after the user scans the two-dimensional code; and
in the case of successful authentication, sending a charging instruction to the mobile charging device.

8. The method according to claim 1, wherein charging the electric vehicle through the charging interface comprising:
receiving a suspend charging request from the user;
querying and displaying the charging status of the mobile charging device;
instructing the mobile charging device to suspend charging when the charging state meets the requirements;
receiving a continue charging request from the user; and
instructing the mobile charging device to continue charging.

9. The method according to claim 1, wherein charging the electric vehicle through the charging interface comprising:
receiving an early end charging request from the user;
querying and displaying the charging status of the mobile charging device; and
in the case the charging state meets the requirements, instructing the mobile charging device to end charging.

10. The method according to claim 1, further comprising:
recording the user's charging status and/or charging duration and/or charging capacity; and
calculating the charging fee according to the user's charging status and/or charging duration and/or charging capacity and/or user classification.

11. A method executed in a mobile application, comprises the following steps:
receiving the user's current location information from the user;
displaying the available mobile charging devices and available charging locations to the user according to the user's current location information;
receiving the order information from the user, wherein the order information includes the mobile charging device selected by the user and the charging location selected by the user;
displaying to the user the navigation information for navigating the user to the charging location; and
displaying to the user the navigation route between the mobile charging device and the charging location, and the current location of the mobile charging device.

12. The method according to claim 11, further comprising the following steps:
receiving user credentials and/or scanned two-dimensional code information from the user;
authenticating the user credentials and/or the two-dimensional code; and
in the case of successful authentication, charging after the mobile charging device is docked with the charging interface.

13. The method according to claim 11, further comprising the following steps:
displaying the charging fee and charging status to the user;
receiving payment information from users; and
submiting a payment request according to the payment information and guiding the user to complete the payment.

14. A system for controlling mobile charging devices, comprising:
a mobile application, configured to perform the following actions:
receiving an order information from the user, the order information including the charging location where the electric vehicle will be charged;
sending the order information to the server;
a server, configured to perform the following actions:
determining a navigation route between the mobile charging device and the charging location according to the order information; and
sending the navigation route to the mobile charging device;
the mobile charging device, configured to perform the following actions:
driving to the charging position according to the navigation route;
and
charging the electric vehicle through the charging interface.

15. The system according to claim 14, wherein the mobile charging device is configured to perform the following actions:
identifying obstacles in the navigation route and determine the types of obstacles, wherein the types of obstacles include pedestrians, fixed states, and temporary obstacles; and
determining whether to re-plan the navigation route according to the type of obstacle and mobility of obstacle.

16. The system according to claim 14, wherein the mobile charging device is configured to perform the following actions:
docking with the charging interface at the charging location.

17. The system according to claim 14, wherein the mobile charging device is configured to perform the following actions:
separating from the charging interface after charging is complete; and
travelling to the parking location or designated location.

18. The system according to claim 14, wherein:
the server is further configured to perform the following actions:
recording the user's charging status and/or charging duration and/or charging capacity; and
calculating the charging fee according to the user's charging status and/or charging duration and/or charging capacity and/or user classification;
sending the charging fee to the mobile application; and
the mobile application is further configured to perform the following actions:
displaying the charging fee to the user;
receiving payment information from users; and
submiting a payment request according to the payment information and guiding the user to complete the payment.

19. The system according to claim 14, wherein mobile charging device comprises:
an automatic travel module, configured to travel to the device to be charged according to the route between the mobile charging device and the device to be charged;
a power module, configured to store and provide electrical energy;
an automatic docking and separation device, configured to perform docking and separation between a first connector and a second connector which is capable of making electrical contact with the first connector, wherein the first connector and the second connector are configured to transmitting electric energy; and
a remote communication module, which is configured to communicate with the server remotely.
